# EUROPÄISCHE PATENTSCHRIFT

(11) **EP 0 380 116 B1**
(45) Veröffentlichungstag und Bekanntmachung des Hinweises auf die Patenterteilung: **27.04.1994**
(21) Anmeldenummer: 90101531.3
(22) Anmeldetag: 25.01.1990
(51) Int. Cl.: B22C 7/02, A61C 13/00, C08F 20/20

(54) **Formmassen zur Herstellung von Gussmodellen**
Moulding composition for manufacturing foundry models
Composition à mouler pour la fabrication de modèles de fonderie

(30) Priorität: 27.01.1989 DE 3902417
(43) Veröffentlichungstag der Anmeldung: 01.08.1990
(73) Patentinhaber: THERA Patent GmbH & Co. KG Gesellschaft für industrielle Schutzrechte, D-82229 Seefeld (DE)
(72) Erfinder: Gasser, Oswald, Dr., D-8031 Seefeld (DE); Guggenberger, Rainer, Dr., D-8036 Herrsching (DE); Ellrich, Klaus, Dr., D-8031 Wörthsee (DE)
(74) Vertreter: Müller, Bernhard, Dr. H. Schmidt & B. Müller Patentanwälte

(56) Entgegenhaltungen:
- EP-A- 0 110 193
- EP-A- 0 198 458
- CH-A- 458 617
- GB-A- 2 018 666
- US-A- 4 844 144
- WPI, FILE SUPPLIER, AN=77-35252Y, Derwent Publications Ltd, London, GB; & JP-A-52 043 719

## Beschreibung

Die Erfindung betrifft rückstandsfrei verbrennbare Formmassen zur Herstellung von Gussmodellen.

Zur Herstellung von metallischen Gussteilen, insbesondere auf dem Gebiet der Dentaltechnik, ist es üblich, zunächst ein Gussmodell aus Wachs herzustellen, am Wachs einen vorgefertigten Gusskanal zu befestigen, das Gussmodell mit einer feuerfesten Einbettmasse zu umkleiden und schliesslich die Wachsmasse durch Ausbrühen oder Verbrennen des Wachses bei Temperaturen zwischen etwa 500 und 700°C zu entfernen. Die erhaltene Negativform wird mit flüssigem Metall gefüllt. Nach Abkühlen und Entformen erhält man ein Gussteil, das mit dem Gussmodell aus Wachs formgleich ist. In analoger Verfahrensweise können auch Gussformen für Formkörper aus giessbarem Glas bzw. giessbarer Glaskeramik hergestellt werden.

Angesichts der Nachteile der Wachsmodelliertechnik, die insbesondere in der Gefahr von ungewollten Verformungen oder Beschädigungen der Modelle bestehen, ist man dazu übergegangen, derartige Gussmodelle aus Kunststoff herzustellen. Nachdem man sich dabei zunächst sogenannter autopolymerisierender Kunststoffe wie Methylmethacrylat, bediente, ist man in letzter Zeit vermehrt zur Verwendung von photopolymerisierbaren, rückstandsfrei verbrennbaren Kunststoffmassen übergegangen; vgl. DE-OS 32 40 907.

Eine Schwierigkeit, die bei Verwendung derartiger photopolymerisierbarer Kunststoffmassen auftritt, besteht darin, dass es beim Ausbrennen der Formmasse leicht zu Rissbildungen in der Gussmuffel kommt. Diese Risse entstehen aufgrund der starken thermischen Ausdehnung der Formmasse beim Aufheizprozess und der gleichzeitig entgegenwirkenden thermischen Ausdehnung der Gussmuffel. Beim Giessvorgang dringt das flüssige Metall, insbesondere Gold, in die Risse ein, so dass am ausgeformten Metallteil Metallfahnen entstehen, die ein Nacharbeiten erforderlich machen. Neben dem dafür erforderlichen Arbeitsaufwand besteht ein Nachteil in den nicht unerheblichen Materialverlusten.

Aufgabe der Erfindung ist es, eine rückstandsfrei verbrennbare Formmasse zur Herstellung von Gussmodellen für Metallgussteile bereitzustellen, die beim Ausbrennen aus der Form keine Störungen der Gussmuffel, insbesondere keine Rissbildungen, verursacht.

Erfindungsgemäss kann durch Zusatz von bestimmten organischen Verbindungen das Expansionsverhalten der Formmassen beim Ausbrennvorgang so beeinflusst werden, dass es nicht zu Rissbildungen an der Gussmuffel kommt.

Gegenstand der Erfindung ist eine Formmasse zur Herstellung von Gussmodellen enthält
(a) 10 - 99,89, vorzugsweise 20 - 90 Gew.-% mindestens eines rückstandsfrei verbrennbaren di- oder polyfunktionellen Acrylsäure- und/oder Methacrylsäureesters,
(b) 0,01 - 5 Gew.-% eines Initiatorsystems, welches die radikalische Polymerisation auslösen kann, und
(c) 0 - 80, vorzugsweise 10 - 70 Gew.-% an rückstandsfrei verbrennbaren organischen Füllstoffen, Pigmenten und anderen Hilfsstoffen,
wobei die Mengenangaben jeweils auf die Gesamtmenge an (a) + (b) + (c) bezogen sind, dadurch gekennzeichnet, dass sie ausserdem
(d) 0,1 - 30, vorzugsweise 1 - 20 Gew.-%, bezogen auf die Komponente (a), einer chemischen inerten, rückstandsfrei verbrennbaren organischen Verbindung mit einem Siedepunkt und/oder Sublimationspunkt im Bereich von >150°C enthält.

Der Siedepunkt der organischen Verbindung liegt vorzugsweise im Bereich von 200 bis 320°C und insbesondere im Bereich von 250 bis 300°C.

Der Anteil der als Komponente (d) verwendeten organischen Verbindung in der Formmasse beträgt vorzugsweise 1 bis 20 Gew.-%, insbesondere 5 bis 15 Gew.-% und ganz besonders etwa 10 Gew.-%, bezogen auf die Komponente (a).

Als derartige Additive geeignete organische Verbindungen, kommen beliebige Verbindungen in Frage, die den vorerwähnten Bedingungen genügen. Unter der Eigenschaft "chemisch inert" ist zu verstehen, dass die Verbindung keine Reaktionen mit der organischen polymerisierbaren Masse oder mit den übrigen Bestandteilen der Formmasse eingeht. Diese Eigenschaft muss auch bis zu der Siede/Sublimationstemperatur des Additivs erhalten bleiben.

Vorzugsweise sind diese Additive unpolar oder weisen eine geringe Polariät auf.

Spezielle Beispiele für als Additive geeignete organische Verbindungen sind Diphenyl 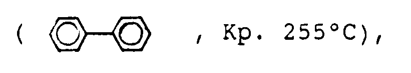
Bibenzyl 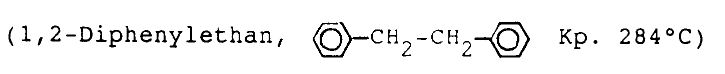
und Decanol (CH₃(CH₂)₉OH, Kp. ca. 230°C).

2,3,6-Trimethylnaphthalin (Kp. 263°C)
Hexamethylbenzol (Kp. 264°C),
Diphenylmethan (Kp. 265,6°C),
1,1-Diphenylethan (Kp. 268°C),
Pentadecan (Kp. 270,5°C),
2,3-Dimethyldiphenyl (Kp. 273°C),
Zimtalkohol (Kp. 275,5°C),
Dibenzylether (Kp./Zersetzungspunkt 295 bis 298°C),
Hexaethylbenzol (Kp. 298°C) sowie
Phthalsäurediethylester (Kp. 298°C).

Die erfindungsgemässen Additive sollten einen Siedepunkt wie o.g. aufweisen. Gut einsetzbar sind aber auch Verbindungen mit einem Sublimationspunkt im genannten Bereich. Prinzipiell ist auch ein Additiv geeignet, das sich im angegebenen Temperaturbereich zersetzt, so lange die Zersetzungsprodukte nicht mit den übrigen Bestandteilen der Formmasse Reaktionen eingehen und dadurch in dieser festgehalten werden. Insbesondere sollen die erfindungsgemässen Additive keine reaktionsfähigen Doppelbindungen, z.B. polymerisierbare Vinylgruppen enthalten, sowie keine temperaturinstabilen Bindungen wie z.B. Peroxide umfassen, die bei höheren Temperaturen Radikale bilden.

Unter Verwendung der erfindungsgemässen Formmassen hergestellte Metallgussteile weisen keine Metallfahnen auf, so dass aufwendige Nachbearbeitungen entfallen können und die Materialverluste auf einem Minimum gehalten werden.

Die polymerisierbaren organischen Zusammensetzungen sind vorzugsweise photopolymerisierbar, da photopolymerisierbare Massen aufgrund ihrer Härtbarkeit bei Raumtemperatur und ihrer langen Verarbeitungszeit besondere Vorteile bieten. Im Prinzip ist die Erfindung jedoch auch auf autopolymerisierende Kunststoffe, die sich meist nach dem Prizip der Redoxpolymerisation aushärten lassen, anwendbar.

Die photopolymerisierbaren Massen enthalten die üblichen Photoinitiatoren, z.B. Benzophenone, Benzoinether, Benzilketale, Thioxanthone und aromatische oder aliphatische Diketone. Besonders geeignet sind 1,2-Diketone, insbesondere das Campherchinon.

Darüber hinaus können sogenannte Photoaktivatoren verwendet werden, z.B. organische Phosphite oder Amine. Im Falle der 1,2-Diketone sind tertiäre Amine besonders wirksame Aktivatoren.

Als Photoinitiatoren eignen sich auch Mono- und Bisacylphosphinoxide, wie 2,4,6-Trimethylbenzoyl-diphenylphosphinoxid und Bis-(2,6-dichlorbenzoyl)-4-n-propylphenyl-phosphinoxid. Es eignen sich aber auch andere Verbindungen dieses Typs wie sie in den Europäischen Patentveröffentlichungsschriften 73413, 7508, 47902, 57474 und 184095 beschrieben sind. Die Konzentration der Photoinitiatoren beträgt vorzugsweise 0,1 bis 3 Gew.-%, besonders bevorzugt 0,1 bis 2 Gew.-%, bezogen auf die Gesamtmasse an polymerisierbaren Verbindungen.

Als photopolymerisierbare Verbindungen sind z.B. die Ester der Acrylsäure und Methacrylsäure geeignet. Di- oder polyfunktionelle (Meth)Acrylsäureester führen zu besonders verformungsstabilen Gussmodellen. Vorteilhaft verwendet werden können beispielsweise die langkettigen Monomeren der US-PS 3066112, also die Umsetzungsprodukte von Bisphenol A und Glycidylmethacrylat oder auch deren durch Addition von Isocyanaten entstandenen Derivaten. Weiterhin gut geeignet sind auch die Diacryl- und Dimethacrylsäureester des ethoxylierten und/oder propoxylierten Bisphenol A mit 2 bis 4 Ethylenoxid- bzw. Propylenoxideinheiten pro Bisphenol A-Einheit. Geeignet sind ferner die Acrylsäure- und Methycrylsäureester mindestens bifunktioneller aliphatischer Alkohole wie Triethylenglykol-di(meth)arylat, Ethylenglykol-di-(meth)acrylat, Hexandiol-di-(meth)acrylat oder auch Trimethylolpropan-tri-(meth)acrylat.

Besonders geeignet sind auch die in der DE-PS 2816823 genannten Diacryl- und Dimethacrylsäureester des Bishydroxymethyltricyclo [5.2.1.0^{2,6}]-decans oder auch die Diacryl- und Dimethacrylsäureester der mit 1 - 6 Ethylenoxid- und/oder Propylenoxideinheiten verlängerten Verbindungen des Bis-hydroxymethyl-tricyclo [5.2.1.0^{2,6}]-decans. Gut geeignet sind auch die in der Europäischen Veröffentlichungsschrift 235826 beschriebenen Methacrylsäureester, wie z.B. Triglykolsäure-bis-[3(4)-methacryloxymethyl-8(9)-tricyclo [5.2.1.0^{2,6}]-decylmethylester].

Zur Einstellung der gewünschten Viskosität kann es auch sinnvoll sein, Gemische aus Monomeren und/oder aus hieraus hergestellten ungesättigten Polymeren zu verwenden. Zusätzlich zu den mindestens bifunktionellen Acrylsäure- und Methacrylsäureestern können bis zu 90 Gew.-% bezogen auf polymerisierbare Bestandteile, vorzugsweise bis 50 Gew.-% monofunktionelle Methacrylsäureester, z.B. Methylmethacrylat, eingesetzt werden.

Die polymerisierbaren Verbindungen sind bevorzugt zu mindestens 10 Gew.-% bi- oder polyfunktionellen Acrylsäure-und/oder Methacrylsäureester, besonders bevorzugt zu mindestens 20, ganz besonders bevorzugt zu mindestens 50 Gew.-%. In einer bevorzugten Ausführungsform werden als polymerisierbare Verbindungen nur bi- oder polyfunktionelle Acrylsäure- und Methacrylsäureester eingesetzt.

Auch Mischungen von Polythiolen und Polyallylverbindungen im stöchiometrischen Verhältnis entsprechend der US-PS 3 898 349 können als photopolymerisierbare Verbindungen verwendet werden.

Zur Erhöhung der mechanischen Festigkeit, Reduzierung des Polymerisationsschrumpfes und zur Kontrolle der Viskosität können die Formmassen auch organische Füllstoffe und/oder lösliche organische Kunststoffe enthalten. Geeignet sind z.B. Polymethylmethacrylat, Nylonperlen, Polyvinylacetat, Polyvinylfluorid oder Polystyrol. Es muss jedoch gewährleistet sein, dass die ausgewählten Zusätze rückstandsfrei verbrennen. Als besonders vorteilhaft haben sich die Fällungspolymerisate gemäss EP-A-0 235 826 erwiesen. Es können aber auch organische Füllstoffe eingesetzt werden, die durch Polymerisation von polymerisierbaren Verbindungen - wie sie auch in der erfindungsgemässen Zubereitung eingesetzt werden - erhalten werden. Das heisst, dass man ein Vorpolymerisat aus diesen Verbindungen herstellt und dieses so heruntermahlt, dass die Kornverteilung eine mittlere Korngrösse von 1 bis 15 µm, vorzugsweise 1 bis 10 µm, besonders bevorzugt 1 bis 5 µm ergibt. Hierbei ist darauf zu achten, dass kein anorganischer Abrieb am gemahlenen Polymerisat anhaftet, der die rückstandsfreie Verbrennung negativ beeinträchtigen könnte.

Die Viskosität der erfindungsgemässen Zubereitung wird in günstiger Weise durch die genannten Massnahmen so eingestellt, dass die Masse mit einem Pinsel oder Spatel dünn auf zutragen ist, aber ohne Einwirkung von Scherkräften nur ein geringes Fliessvermögen aufweist.

Zur Einstellung des Fliessverhaltens sowie der Klebeeigenschaften der erfindungsgemässen Zubereitung können der Masse Weichmacher und Emulgatoren zugesetzt werden, so beispielsweise die Stearyl-, Oleyl- und Glycerinester von Polyoxyethylen, Polyalkylenglykolether, Polyoxyethylenarylether, sowie die Polyoxyethylensorbitanmonoester der Laurinsäure, der Palmitinsäure sowie der Oleyl- und Stearinsäure. Gut verwendet werden können auch die Copolymeren aus Ethylenoxid und Propylenoxid mit Molekulargewichten zwischen 500 und 5000, bevorzugt zwischen 1000 und 4000. Als Weichmacher angewendet werden können auch Citrate, wie Tributylcitrat, Phthalsäureester von langkettigen Alkoholen, wie Dioctyl- oder Dinonylphthalat, sowie auch gänzlich unpolare Verbindungen, wie dünnflüssige Paraffinöle oder Dibenzyltoluol.

Zur besseren Unterscheidung vom Kiefermodell und zur Kontrolle der aufgetragenen Schichtstärke ist es vorteilhaft, die verwendete photopolysierbare Masse mit Pigmenten und/oder Trübungsmitteln zu versehen.

Die Wellenlänge des bei der Photopolymerisation verwendeten Lichts muss so gewählt werden, dass sie der wirksamen Lichtabsorption des Photoinitiators entspricht. Wegen der Unschädlichkeit der Strahlung und der einfachen und preisgünstigen Konstruktion der Bestrahlungseinheit ist es vorteilhaft,-sichtbares Licht im Wellenbereich von etwa 400 bis 500 nm, bevorzugt zusammen mit 1,2-Diketoninitiatoren und/oder Acylphosphinoxiden zu verwenden.

Die Massen, welche ausserdem noch die üblichen Stabilisatoren und Inhibitoren enthalten könnnen, werden in lichtdichten Behältern zur Verwendung bereitgehalten.

Die erfindungemässen Massen eignen sich zur Herstellung von beliebigen Gussteilen, besonders auf dem Gebiet der Dentaltechnik. Es kommt aber auch das Gebiet der orthopädischen Prothetik, z.B. bei Gussteilen zur Ausfüllung von Knochendefekten, oder das Gebiet der Schmucktechnik in Frage. Beispiele für metallische Gussteile auf dem Gebiet der Dentaltechnik sind Inlays, Kronen, Brücken, Sekundärteile von Konuskronen, Patrizenteilen von Geschieben, Teleskopanker, Stegüberwürfe und dergl.. Gussteile aus Glaskeramik können insbesondere in Form von Inlays, Onlays, Kronen und Verblendschalen eingesetzt werden.

Die erfindungsgemässe Masse eignet sich insbesondere zum schichtweisen Auftrag (vgl. DE-OS 32 40 907), wobei vorteilhaft jeweils Schichten von etwa 0,5 mm bis 1 mm Dicke aufgebracht werden und die Masse dann durch Bestrahlen mit einer Lichtquelle ausgehärtet wird. Dies ermöglicht ein besonders sorgfälltiges und rationelles Arbeiten ohne grosse Materialverluste. Durch den Auftrag in dünnen Schichten wird der Polymerisationsschrumpf weitgehend kompensiert. Nach dem Auftragen der ersten Schicht des erfindungsgemässen Materials kann auch mit herkömmlichen Materialien wie Wachs weitergearbeitet werden, wenn dadurch die Stabilität des Gesamtbauteils nicht beeinträchtigt ist.

Nach Fertigstellung des Gussmodells durch Bestrahlung der photopolymerisierbaren Zubereitung wird auf übliche Weise ein Gusskanal angebracht und das Gussmodell in einer Gussmuffel mittels Einbettmasse eingebettet. Die Gussmuffel wird anschliessend vorzugsweise für eine bestimmte Zeitspanne (vorzugsweise 30 bis 60 Minuten) auf eine Temperatur im Bereich des Siedepunktes des erfindungsgemäss verwendeten Additivs aufgeheizt. Anschliessend erfolgt der eigentliche Ausbrennvorgang. Dabei wird vorzugsweise die Temperatur auf 550 bis 600°C erhöht. Nach einer gewissen Haltezeit von beispielsweise 10 - 20 Minuten wird auf die Endtemperatur im Bereich von 700°C weitergeheizt. Diese Endtemperatur wird bis ca. 30 bis 60 Minuten beibehalten. Anschliessend wird die Negativform in der Gussmuffel vorzugsweise in einer Gussschleuder mit einer Edelmetall-Legierung ausgegossen. Nach Abkühlen auf Raumtemperatur kann das gegossene Formstück ausgebettet und gegebenenfalls ausgearbeitet werden. Wie bereits erwähnt, entfällt dabei die Nachbearbeitung zur Entfernung von Gussfahnen.

Nachstehend wird die Erfindung anhand von Beispielen näher erläutert.

### Beispiel 1

80 Gew.-% Urethandimethacrylat (Plex® 6661-0, Firma Röhm) werden mit 19,5 Gewichtsteilen Triethylenglykoldimethacrylat und 0,5 Gewichtsteilen Bis-(2,6-dichlorbenzoyl)-4-n-propylphenylphosphinoxid unter leichtem Erwärmen so lange gerührt, bis eine homogene klare Lösung entsteht. Zu dieser Lösung werden die in der Tabelle angegebenen Gew.-% an erfindungsgemässen Zusatz hinzugefügt. Anschliessend werden die viskosen Lösungen in eine Messingform mit den Innenmassen 40 x 5 x 1 mm eingegossen und mittels einer dentalen Halogenlichtlampe (Elipar®, Firma ESPE) 1 Minute bis zur vollständigen Polymersiation belichtet. Die Prüfkörper werden anschliessend entformt und nach 30 Minuten Lagerung bei Raumtemperatur mit einem Gusskanal aus Wachs versehen und in einer Gussmuffel mittels Einbettmasse (Deguvest®, Firma Degussa, eingestellt auf 50 % der maximalen Expansion) eingebettet. Anschliessend wird die Gussmuffel (Grösse 3) in einem üblichen Vorwärmeofen (Combilabor® CL-VS 2002 Firma Heraeus) auf 230°C aufgeheizt. Diese Temperatur wird für 30 Minuten beibehalten, anschliessend wird weitergeheizt bis auf 580°C. Nach 15 Minuten Haltezeit wird weitergeheizt bis auf 700°C Endtemperatur, die für weitere 45 Minuten beibehalten wird. Anschliessend werden die Gussmuffeln in eine übliche Gussschleuder (Formax® 35 K, Firma Bego) eingebracht und die Negativform mit Edelmetallegierung (Hera® SG, Firma Heraeus) ausgegossen. Nach Abkühlen auf Raumtemperatur kann das gegossene Formstück ausgebettet und ggf. ausgearbeitet werden.

Wie aus Tabelle 1 ersichtlich, hat das Formteil, welches keinen erfindungsgemässen Zusatz im Modellierkunststoff enthielt, zu einer deutlichen Rissbildung in der Gussmuffel geführt, welche sich in Guss- und Abrissfahnen im Formteil (Gussstück) wiederspiegelt. Zudem ist die Ausarbeitung sehr aufwendig und grosse Verluste an Edelmetallegierung sind nicht zu vermeiden. Enthält der Modellierkunststoff die erfindungsgemässen Zusätze, bleibt die Gussmuffel stabil, das Formstück enthält keinerlei Gussfahnen und die Ausarbeitung beschränkt sich auf das Entfernen des Einbettmaterials.

**Tabelle 1**

| | % Zusatzstoff | Siede- bzw. Sublimationspunkt des Zusatzstoffes | Beurteilung des Gussobjektes |
|---|---|---|---|
| A (Vergleich) | 0 | - | Risse in der Gussmuffel -Fahnen am Gussobjekt |
| B (erfindungsgemäss) | 9 Gew.-% Diphenyl | 255°C | keine Risse keine Gussfahnen |
| C (erfindungsgemäss) | 10 Gew.-% Dibenzyl | 285°C | keine Risse keine Gussfahnen |
| D (erfindungsgemäss) | 9 Gew.-% Decanol | ca. 230°C | keine Risse, keine Gussfahnen |

### Beispiel 2

### Modellierpaste

90 Gewichtsteile eines Methacrylestergemisches gemäss Beispiel 1 der EP 0 235 826, 60 Gewichtsteile Bis-(acryloxymethyl)-tricyclo[5.2.1.0.^{2,6}]-decan, 15 Gewichtsteile Dibenzyl und 0,53 Gewichtsteile Bis-(2,6-dichlorbenzoyl)-4-n-propylphenylphosphinoxid werden unter leichtem Erwärmen so lange gerührt, bis eine homogene klare Lösung entsteht. Zu dieser Lösung werden anschliessend 7,5 Gewichtsteile eines Copolymerisats aus Ethylen- und Propylenoxid und 25,5 Gewichtsteilen eines organischen Füllstoffes gemäss Beispiel 1 der EP-A 0 270 915 gegeben und so lange geknetet bis eine homogene geschmeidige Paste entsteht. Die so erhaltene Modellierpaste ist hervorragend modellierbar und weist die nachstehenden genannten physikalischen Messwerte auf. Polymerisierbare Schichtdicke (20 Sekunden Belichtung mit einem dentalen Strahlungsgerät, Elipar®, Firma ESPE) 7,4 mm, Viskosität 6,3 Pa.s, Oberflächenhärte 71 MPa, Druckfestigkeit 300 MPa, Biegefestigkeit 70 MPa. Wird ein Probestück wie in Beispiel 1 beschrieben, aus dem Modelliermaterial gemäss diesem Beispiel hergestellt, und mit Edelmetall ausgegossen, so zeigt sich an dem Gussteil eine perfekt glatte Oberfläche (d. h. keinerlei Verbrennungsrückstand) sowie keinerlei Gussfahnen an den Ecken und Kanten des Gussstücks.

### Beispiel 3

### Herstellung des Sekundärteils einer Konuskrone:

Zur Herstellung einer Konuskrone wird auf der Aussenfläche einer fertig in Metall gefrästen Primärkrone durch schichtweises Auftragen der Modellierpaste nach Beispiel 2 und jeweiliges Belichten eine gleichmässige Schicht von ca. 0,5 mm des lichthärtenden Materials aufgebracht. Nach der Bestrahlung kann die Kunststoffkappe zur Überprüfung der Innenseite von der Primärkrone abgenommen werden. Nach der Überprüfung wird die entstandene passgenaue Hülse wieder auf das Primärteil aufgesetzt und die anatomische Form des Sekundärteils durch weiteres portionsweises Auftragen und anschliessendes Härten des lichthärtenden Kunststoffs modellierend aufgebaut. Die so erhaltene Sekundärkrone wird dann von der Primärkrone abgenommen und wie üblich mit einem Gussstift aus Wachs versehen und mit feuerfester Einbettmasse (Deguvest® HFG, Firma Degussa) umkleidet. Durch einen Erhitzungsvorgang wie in Beispiel 1 beschrieben wird der lichthärtende Kunststoff rückstandslos verbrannt. Anschliessend kann wie üblich gegossen, ausgebettet und ausgearbeitet werden. Die Ausarbeitung ist durch einfaches Sandtrahlen (z.B. mit Glanzstrahlperlen) leicht zu bewerkstelligen. Es müssen keine Gussfahnen und Oberflächenrauhigkeiten der Krone durch aufwendiges Ausarbeiten entfernt werden. Die erhaltene Sekundärkrone aus Metall ist in Form und Genauigkeit mit der Sekundärkrone aus lichthärtendem Material identisch und weist somit eine gute Konushaftung auf der Primärkrone auf. In ähnlicher Weise können auch die Sekundärteile von Teleskopkronen und Geschiebeteile einschliesslich der Verrieglungselemente (z.B. Dreh-, Schwing- oder Streckriegel) hergestellt werden.

## Patentansprüche

1. Formmasse zur Herstellung von Gussmodellen, enthaltend
(a) 10 - 99,89, vorzugsweise 20 - 90 Gew.-% mindestens eines rückstandsfrei verbrennbaren di- oder polyfunktionellen Acrylsäure- und/oder Methacrylsäureesters,
(b) 0,01 - 5 Gew.-% eines Initiatorsystems, welches die radikalische Polymerisation auslösen kann, und
(c) 0 - 80, vorzugsweise 10 - 70 Gew.-% an rückstandsfrei verbrennbaren organischen Füllstoffen, Pigmenten und anderen Hilfsstoffen,
wobei die Mengenangaben jeweils auf die Gesamtmenge an (a) + (b) + (c) bezogen sind, dadurch gekennzeichnet, dass sie ausserdem
(d) 0,1 - 30, vorzugsweise 1 - 20 Gew.-%, bezogen auf die Komponente (a), einer chemisch inerten, rückstandsfrei verbrennbaren organischen Verbindung mit einem Siedepunkt und/oder Sublimationspunkt im Bereich von >150°C enthält.

2. Formmasse nach Anspruch 1, dadurch gekennzeichnet, dass der Siedepunkt und/oder Sublimationspunkt der Komponente (d) im Bereich von 200 bis 320°C liegt.

3. Formmasse nach Anspruch 2, dadurch gekennzeichnet, dass der Siedepunkt und/oder Sublimationspunkt der Komponente (d) im Bereich von 250 bis 300°C liegt.

4. Formmasse nach einem der vorstehenden Ansprüche, dadurch gekennzeichnet, dass der Anteil der Komponente (d) etwa 5 - 15 Gew.-% beträgt.

5. Formmasse nach einem der vorstehenden Ansprüche, dadurch gekennzeichnet, dass die Komponente (d) unpolar ist oder eine geringe Polarität aufweist.

6. Formmasse nach einem der vorstehenden Ansprüche, dadurch gekennzeichnet, dass sie photopolymerisierbar ist.

7. Verfahren zur Herstellung individueller Metallgussteile mittels eines Gussmodells, in welchem man am Gussmodell mindestens einen Giesskanal befestigt, das Gussmodell in eine feuerfeste Formmasse einbettet, das Gussmodell durch Erhitzen rückstandsfrei entfernt, in die so erhaltene Form flüssiges Metall einbringt, die Form erkalten lässt und das Gussteil ausbettet, dadurch gekennzeichnet, dass man zur Herstellung des Gussmodells eine Formmasse nach einem der Ansprüche 1 bis 6 verwendet.

8. Verwendung von rückstandsfrei verbrennbaren organischen Verbindungen mit einem Siedepunkt und/oder Sublimationspunkt von >150°C zur Herstellung von Formmassen für rückstandsfrei verbrennbare Gussmodelle.

## Claims

1. Molding composition for making casting patterns containing
(a) 10 - 99.89, preferably 20 - 90 %, by weight of at least one di or polyfunctional acrylic acid and/or methacrylic acid ester which burns without residue,
(b) 0.01 - 5 % by weight of an initiator system which can initiate the radical polymerization and
(c) 0 - 80, preferably 10 - 70 %, by weight of organic fillers, pigments and other auxiliary substances burning without residue,
the quantity particulars each being related to the total amount of (a) + (b) + (c), characterized in that it further contains
(d) 0.1 - 30, preferably 1 - 20 %, by weight with respect to the component (a) of a chemically inert organic compound burning without residue and having a boiling point and/or sublimation point in the range >150°C.

2. Molding composition according to claim 1, characterized in that the boiling point and/or sublimation point of the component (d) lies in the range from 200 to 320°C.

3. Molding composition according to claim 2, characterized in that the boiling point and/or sublimation point of the component (d) lies in the range from 250 to 300°C.

4. Molding composition according to any one of the preceding claims, characterized in that the proportion of the component (d) is about 5 - 15 % by weight.

5. Molding composition according to any one of the preceding claims, characterized in that the component (d) is nonpolar or has a low polarity.

6. Molding composition according to any one of the preceding claims, characterized in that it is photopolymerizable.

7. Method of making individual metal castings by means of a casting pattern in which at least one casting passage is secured to the casting pattern, the casting pattern is embedded in a refractory molding composition, the casting pattern is removed without residue by heating, liquid metal is introduced into the mold thus obtained, the mold allowed to cool and the casting removed, characterized in that for making the casting pattern a molding composition according to any one of claims 1 to 6 is employed.

8. Use of organic compounds burning without residue and having a boiling point and/or sublimation point of >150°C for making molding compositions for casting patterns burning without residue.

## Revendications

1. Composition à mouler pour la préparation de modèles de fonderie, contenant
(a) 10 - 99,89, de préférence 20 - 90 % en masse d'au moins un ester d'acide acrylique et/ou d'acide méthacrylique di- ou polyfonctionnel brûlant sans résidu,
(b) 0,01 - 5 % en masse d'un système amorceur qui est capable de déclencher la polymérisation radicalaire,
(c) 0 - 80, de préférence 10 - 70 % en masse de charges, pigments et autres additifs organiques brûlant sans résidu,
les données de quantités se rapportant toujours à la quantité totale de (a) + (b) + (c), caractérisée en ce qu'elle contient en outre
(d) 0,1 - 30, de préférence 1 - 20 % en masse, par rapport au constituant (a), d'un composé organique chimiquement inerte, brûlant sans résidu, ayant un point d'ébullition et/ou un point de sublimation supérieur à 150°C.

2. Composition à mouler selon la revendication 1, caractérisée en ce que le point d'ébullition et/ou le point de sublimation du constituant (d) est compris entre 200 et 320°C.

3. Composition à mouler selon la revendication 2, caractérisée en ce que le point d'ébullition et/ou le point de sublimation du constituant (d) est compris entre 250 et 300°C.

4. Composition à mouler selon l'une quelconque des revendications précédentes, caractérisée en ce que la teneur en constituant (d) est comprise entre environ 5 et 15 % en masse.

5. Composition à mouler selon l'une quelconque des revendications précédentes, caractérisée en ce que le constituant (d) est apolaire ou présente une polarité faible.

6. Composition à mouler selon l'une quelconque des revendications précédentes, caractérisée en ce qu'elle est photopolymérisable.

7. Procédé de préparation de pièces coulées en métal individuelles à l'aide d'un modèle de fonderie, dans lequel on fixe sur le modèle de fonderie au moins un canal de coulée, on enrobe le modèle de fonderie dans une composition à mouler réfractaire, on élimine le modèle de fonderie par chauffage sans résidu, on introduit dans le moule ainsi obtenu du métal liquide, on laisse refroidir le moule et on démoule la pièce coulée, caractérisé en ce que l'on utilise pour la préparation du modèle de fonderie une composition à mouler selon l'une des revendications 1 à 6.

8. Utilisation de composés organiques brûlant sans résidu ayant un point d'ébullition et/ou un point de sublimation supérieur à 150°C pour la préparation de compositions à mouler pour des modèles de fonderie brûlant sans résidu.
